# EUROPEAN PATENT APPLICATION

(11) **EP 4 489 162 A1**
(43) Date of publication of application: **08.01.2025**
(21) Application number: 24185028.8
(22) Date of filing: 27.06.2024
(51) Int. Cl.: H01M 10/04, H01M 50/103, H01M 50/56, H01M 50/564, H01M 50/107, H01M 50/152

(54) **RECHARGEABLE BATTERY**

(30) Priority: 04.07.2023 KR 20230086567
(71) Applicant: SAMSUNG SDI CO., LTD., Giheung-gu Yongin-si, Gyeonggi-do 17084 (KR)
(72) Inventor: Kim, Dae Kyu, 17084 Yongin-si, Gyeonggi-do (KR); Seo, Kwangsoo, 17084 Yongin-si, Gyeonggi-do (KR)
(74) Representative: Gulde & Partner

(57) **Abstract**

A rechargeable battery (100) includes an electrode assembly (130), a can (120) accommodating the electrode assembly in an interior space, and a cap assembly (140) coupled to the can to seal the can. The cap assembly includes a cap-up (40) configured to contact an external device. The cap-up includes a base portion (41), a through-hole at a center of the base portion, a terminal portion (42) located farther from the electrode assembly than the base portion, and a number of support portions (43) connecting the base portion to the terminal portion. The terminal portion includes a protruding portion (44) extending outward from an edge located between adjacent support portions.

## Description

### BACKGROUND

### 1. Field

The present disclosure relates to a rechargeable battery.

### 2. Description of the Related Art

In general, a rechargeable battery includes an electrode assembly, a can that accommodates the electrode assembly, and a cap assembly that is assembled in the opening of the can to seal the can and allow current generated in the electrode assembly to flow to an external device. The cap assembly may include a safety vent that ruptures when the internal pressure of the rechargeable battery increases and discharges gas, and a cap-up having a terminal portion for contacting an external device and a through-hole for gas discharge.

The cap-up may include a coating layer to prevent corrosion, and the coating layer may be produced by electroplating. During electroplating, a plurality of cap-ups may be stacked on top of each other and placed into an electrolytic bath. However, if there is not a sufficient gap between the stacked cap-ups, the plating solution may not penetrate completely, resulting in plating defects. The plating defects may cause corrosion of the cap-up and deteriorate the quality of welding between the cap-up and the safety vent.

### SUMMARY

The present disclosure attempts to provide a rechargeable battery including a cap-up capable of preventing plating defects during a process of electroplating.

A rechargeable battery includes an electrode assembly, a can accommodating the electrode assembly in an interior space, and a cap assembly coupled to the can and including a cap-up configured to contact an external device. The cap-up includes a base portion, a through-hole at a center of the base portion, a terminal portion located farther from the electrode assembly than the base portion, and a number of support portions connecting the base portion to the terminal portion. The terminal portion includes a protruding portion extending outward from an edge located between adjacent support portions of the number of support portions.

The terminal portion may be circular, and the protruding portion may be extend substantially parallel to the terminal portion and away from a center point of the terminal portion. The terminal portion may include a first circumferential portion in contact with the support portions and a second circumferential portion located between adjacent support portions, and the protruding portion may be located at substantially a center of the second circumferential portion.

The protruding portion may have an arc shape having a single curvature, and a curvature center of the protruding portion may be located in the terminal portion and spaced apart by a distance to the center point of the terminal portion. The protruding portion may include two oblique portions and a curved portion extending between the two oblique portions. The curved portion may be formed in an arc shape having a single curvature, and a curvature center of the curved portion may substantially coincide with the curvature center of the first circumferential portion and the second circumferential portion.

A maximum protruding amount of the protruding portion may be smaller than a distance between an inner side surface of the base portion and the second circumferential portion in a planar view.

In one embodiment, a rechargeable battery includes an electrode assembly, a can accommodating the electrode assembly in an interior space, and a cap assembly coupled to the can and including a cap-up configured to contact an external device. The cap-up includes a base portion, a through-hole at a center of the base portion, a terminal portion located farther from the electrode assembly than the base portion, and a number of support portions connecting the base portion to the terminal portion. The terminal portion includes a number of connection portions connected to each of the support portions, a circular central portion located on an inner side of the connection portions, and a protruding portion extending outward from an edge of the central portion located between the adjacent connection portions of the number of connection portions.

The protruding portion may extend substantially parallel to the central portion and away from a center point of the central portion. The protruding portion may have an arc shape having a single curvature. A maximum protruding amount of the protruding portion with respect to the central portion may be greater than a width of the connection portion measured along a radial direction.

In one embodiment, a rechargeable battery includes an electrode assembly, a can accommodating the electrode assembly in an interior space, and a cap assembly coupled to the can and including a cap-up configured to contact an external device. The cap-up includes a base portion, a through-hole at a center of the base portion, a non-circular terminal portion located farther from the electrode assembly than the base portion, and a number of support portions connecting the base portion to the terminal portion. The non-circular terminal portion includes a protruding portion extending outward from an edge located between the adjacent support portions of the number of support portions.

The terminal portion may be formed in a non-circular structure in which a recess portion is provided on the edge located between the adjacent support portions, and the protruding portion may be located at a center of the recess portion. The recess portion may have an arc shape having a single curvature, and a curvature the center of the recess portion may be located on an outer side of the terminal portion. The recess portion may be formed in a straight-line shape that connects two adjacent support portions among the number of support portions.

The protruding portion may include an arc shape having a single curvature, and a distance between a center point of the terminal portion and an outermost point of the protruding portion may be greater than the distance between the center point of the terminal portion and the plurality of support portions in a planar view.

According to an embodiment, the cap-up may eliminate or at least reduce plating defects and improve plating quality of the coating layer during the process of plating the coating layer by using the protruding portion. Accordingly, a rechargeable battery according to an embodiment may effectively eliminate or at least reduce corrosion of the cap-up, and improve welding quality between the cap-up and the safety vent, such that manufacturing defects of the cap assembly may be prevented or at least reduced while securing a stable current flow.

### BRIEF DESCRIPTION OF THE DRAWINGS

FIG. 1 is a perspective view of a rechargeable battery according to a first embodiment.
FIG. 2 is a cross-sectional view of the rechargeable battery shown in FIG. 1.
FIG. 3 is an enlarged view of a cap assembly of the rechargeable battery shown in FIG. 2.
FIG. 4 is a top plan view of a cap-up of the cap assembly shown in FIG. 3.
FIG. 5 and FIG. 6 is a partial cross-sectional view showing a stacked configuration of the cap-up shown in FIG. 4.
FIG. 7 is a top plan view of a cap-up of a rechargeable battery according to second embodiment.
FIG. 8 is a top plan view of a cap-up of a rechargeable battery according to third embodiment.
FIG. 9 is a top plan view of a cap-up of a rechargeable battery according to fourth embodiment.
FIG. 10 is a top plan view of a cap-up of a rechargeable battery according to fifth embodiment.
FIG. 11 is a top plan view of a cap-up of a rechargeable battery according to sixth embodiment.

### DETAILED DESCRIPTION

The present disclosure will be described more fully hereinafter with reference to the accompanying drawings, in which embodiments of the invention are shown. As those skilled in the art would realize, the described embodiments may be modified in various different ways, all without departing from the scope of the present disclosure.

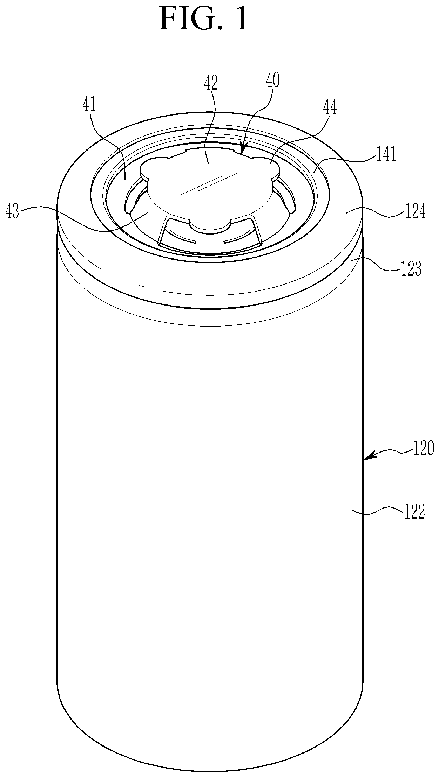

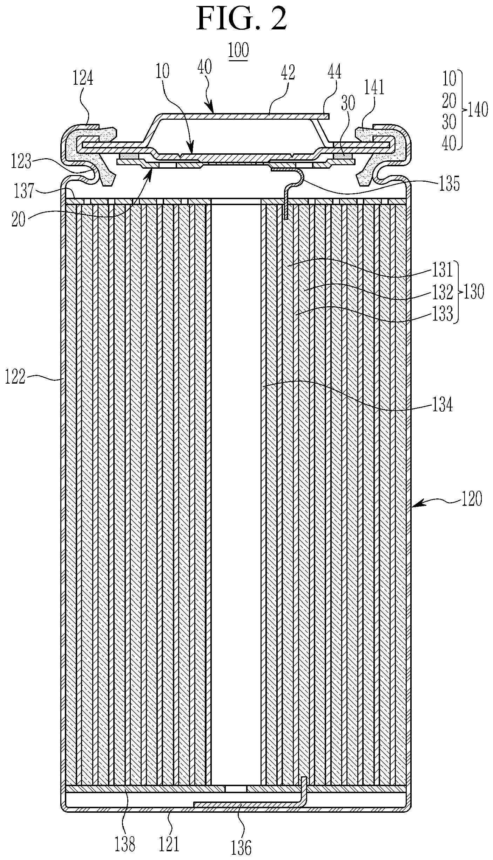

FIG. 1 is a perspective view of a rechargeable battery according to a first embodiment. FIG. 2 is a cross-sectional view of the rechargeable battery shown in FIG. 1.

Referring to FIG. 1 and FIG. 2, a rechargeable battery 100 according to one embodiment of the present disclosure may include a can 120, an electrode assembly 130 accommodated in an interior of the can 120, and a cap assembly 140 coupled to the can 120 at an opening of the can 120 and sealing the can 120. The cap assembly 140 may include a safety vent 10 configured to prevent explosion of the rechargeable battery 100 and a cap-up 40 configured to cover the safety vent 10.

The rechargeable battery 100 of the present embodiment may be cylindrical, but the present disclosure is not limited to such an example. The can 120 may include a bottom portion 121 and a side portion 122. The bottom portion 121 may be circular plate, and the side portion 122 may be cylindrical. During the manufacturing process of the rechargeable battery 100, one side (e.g., the upper side) of the can 120 may be opened, and the electrode assembly 130 may be accommodated inside can 120, together with electrolyte. The can 120 may be made of steel, steel alloy, aluminum, aluminum alloy, or the like.

A beading portion 123 and a crimping portion 124 may be located on the side portion 122 of the can 120. The beading portion 123 may be a portion deformed to be concave toward an inner portion of the can 120, and the crimping portion 124 may be a portion where an edge of the side portion 122 is deformed to be concave inward. The movement of the electrode assembly 130 may be suppressed by the beading portion 123, and the cap assembly 140 may be fixed to the can 120 by the beading portion 123 and the crimping portion 124.

The electrode assembly 130 may include a positive electrode 131, a negative electrode 132, and a separator 133. The positive electrode 131 may include a positive electrode substrate and a positive active material layer on the positive electrode substrate. The negative electrode 132 may include a negative electrode substrate and a negative active material layer on the negative electrode substrate. The separator 133 may be located between the positive electrode 131 and the negative electrode 132, and the separator 133 may insulate the positive electrode 131 and the negative electrode 132 from each other while allowing the movement of lithium ions.

The positive electrode substrate may include aluminum foil. The positive active material layer may include transition metal oxide such as LiCoO₂, LiNiO₂, LiMn₂O₄, or the like. The negative electrode substrate may include a copper foil, a nickel foil, or the like. The negative active material layer may include a carbon-based material such as graphite. The separator 133 may include polyethylene or polypropylene or the like.

The positive electrode 131, the negative electrode 132, and the separator 133 may be wound in the form of a generally circular cylinder, and a center pin 134 of a cylinder shape may be located at a center of the electrode assembly 130. The center pin 134 may suppress deformation of the electrode assembly 130 during the process of charging and discharging the rechargeable battery 100, and may act as a passage for the gas generated inside the rechargeable battery 100. In one or more embodiments, the center pin 134 may be omitted.

The positive electrode 131 may include a positive electrode tab 135 attached to the positive electrode substrate. The negative electrode 132 may include a negative electrode tab 136 included in the negative electrode substrate. The positive electrode tab 135 and the negative electrode tab 136 may be opposite each other (e.g., located on opposite sides or ends of the electrode assembly 130). In one or more embodiments, the positive electrode tab 135 may be located on one side (e.g., the upper side) of the electrode assembly 130 facing the cap assembly 140, and may be fixed to the cap assembly 140. The negative electrode tab 136 may be located on one side (e.g., the lower side) of the electrode assembly 130 facing the bottom portion 121 of the can 120, and may be fixed to the bottom portion 121.

A first insulation plate 137 may be located between the electrode assembly 130 and the cap assembly 140, and a second insulation plate 138 may be located between the bottom portion 121 of the can 120 and the electrode assembly 130. The first insulation plate 137 may prevent the negative electrode 132 of the electrode assembly 130 from contacting the cap assembly 140, and the second insulation plate 138 may prevent the positive electrode 131 of the electrode assembly 130 from contacting the can 120.

A hole communicating with an interior of the center pin 134, a hole for passing through of the positive electrode tab 135, and a plurality of holes for electrolyte injection may be located in the first insulation plate 137. A hole communicating with the interior of the center pin 134, and a hole for passing through of the negative electrode tab 136 may be located in the second insulation plate 138.

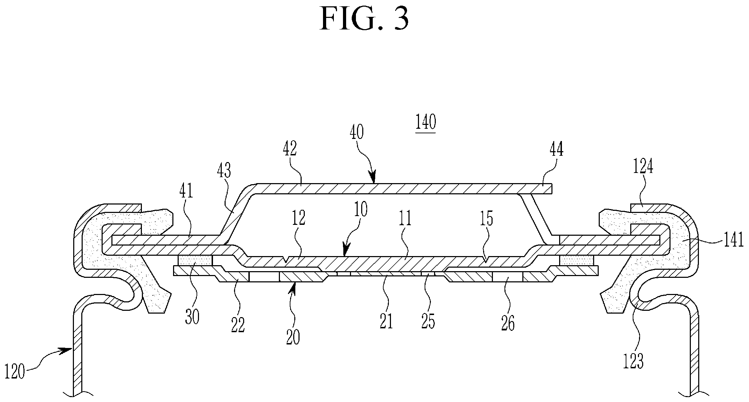

FIG. 3 is an enlarged view of the cap assembly 140 of the rechargeable battery 100 shown in FIG. 2.

Referring to FIG. 2 and FIG. 3, the cap assembly 140 may include the safety vent 10 provided with a notch groove 15, a cap-down 20 located on one side (e.g., the lower side) of the safety vent 10 facing the electrode assembly 130, an insulating portion 30 having a ring shape located between the safety vent 10 and the cap-down 20, and the cap-up 40 located on one side (e.g., the upper side) of the safety vent 10 opposite to the cap-down 20. The safety vent 10 may be referred to as a current interruptive device (CID).

The safety vent 10 may include a central portion 11, and a peripheral portion 12 surrounding the central portion 11. A thickness of the central portion 11 may be greater than a thickness of the peripheral portion 12, and the notch groove 15 may be located in the peripheral portion 12. The cap-down 20 may include a central portion 21, and a peripheral portion 22 surrounding the central portion 21, and a thickness of the central portion 21 may be smaller than a thickness of the peripheral portion 22. At least one first opening 25 may be located in the central portion 21, and at least one second opening 26 may be located at the peripheral portion 22.

The central portion 11 of the safety vent 10 and the central portion 21 of the cap-down 20 may be bonded or coupled together by a method such as welding, and in remaining portions excluding or outside of the central portions 11 and 21 (e.g., the peripheral portions 12 and 22), the safety vent 10 and the cap-down 20 may be spaced apart from each other by a distance (e.g., a gap). The insulating portion 30 may surround the central portions 11 and 21, and may be located between the safety vent 10 and the cap-down 20. The insulating portion 30 may be bonded or coupled to the safety vent 10 and the cap-down 20 by a method such as fusion.

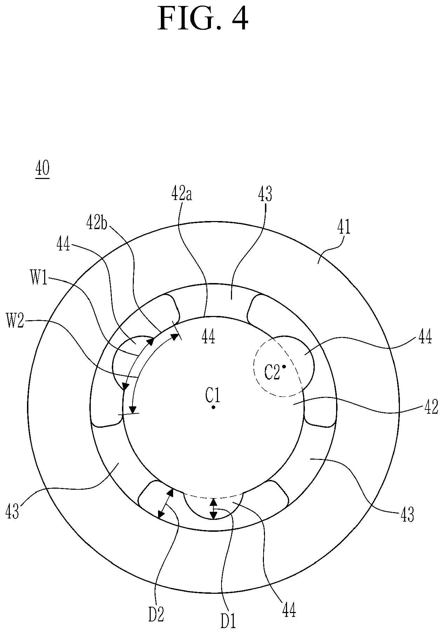

FIG. 4 is a top plan view of the cap-up 40 of the cap assembly 140 shown in FIG. 3.

Referring to FIG. 3 and FIG. 4, the cap-up 40 may include a base portion 41 and a terminal portion 42 and a plurality of support portions 43 connecting the base portion 41 to the terminal portion 42.

The base portion 41 may be in a ring shape including a through-hole at a center, and the terminal portion 42 may be in a flat circular plate shape (e.g., a planar circular disk). A diameter of the terminal portion 42 may be smaller than an inner diameter of the base portion 41 (e.g., the terminal portion 42 may be inside the through-hole of the base portion 41 in a top view), and the terminal portion 42 may be located farther from the electrode assembly 130 than the base portion 41. The base portion 41 may overlap an edge of the peripheral portion 12 of the safety vent 10, and the base portion 41 may be bonded or coupled to the safety vent 10 by a method such as welding.

The plurality of support portions 43 may integrally connect the base portion 41 and the terminal portion 42 to each other, and the plurality of support portions 43 may be oriented in an oblique direction by being bent from the base portion 41 and the terminal portion 42 at a predetermined angle. The plurality of support portions 43 may be spaced apart from each other along a circumference direction of the cap-up 40. Although FIG. 4 illustrates that three support portions 43 are located at equal (or substantially equal) intervals along the circumference direction of the cap-up 40, the present disclosure is not limited to this configuration of the support portions 43 depicted in FIGS. 1-4 and the cap-up 40 may include any other suitable number of support portions 43.

Referring to FIG. 2 to FIG. 4, the positive electrode tab 135 of the electrode assembly 130 may be fixed to one surface (e.g., the lower surface) of the cap-down 20, and the cap-down 20 and the safety vent 10 and the cap-up 40 may be positively charged. The terminal portion 42 of the cap-up 40 may contact an external device and function as a positive terminal that allows current to flow to the external device. The can 120 to which the negative electrode tab 136 is fixed may be negatively charged, and the bottom portion 121 of the can 120 may function as a negative terminal.

The cap assembly 140 of the embodiment described above may be coupled to the side portion 122 of the can 120 via an insulation gasket 141. The insulation gasket 141 may surround an edge of the cap-up 40 and the safety vent 10, and may be squeezed (e.g., compressed) between the crimping portion 124 and the beading portion 123 of the can 120.

In the process of using the rechargeable battery 100, gas may generate in the interior of the can 120 due to various reasons, and an internal pressure of the rechargeable battery 100 may increase due to the gas. When gas is generated, pressure may be continuously applied to the safety vent 10 through first and second openings 25 and 26 of the cap-down 20, and at a particular pressure (e.g., a threshold pressure), the safety vent 10 may be deformed toward the outer side (e.g., upper side) of the cap assembly 140, such that the safety vent 10 and the cap-down 20 may be separated from each other.

The central portion 21 of the cap-down 20 may be ruptured from the peripheral portion 22 in response to the gas pressure exceeding the threshold pressure, and the central portion 21 of the cap-down 20 may rise together with the safety vent 10 because it is attached to the central portion 11 of the safety vent 10. The current flow is blocked by the separation of the safety vent 10 and the cap-down 20. As the pressure continues to rise, the safety vent 10 is configured to rupture around the notch groove 15 and the internal gas is discharged. The internal gas may be discharged to the outside of the rechargeable battery 100 through the through-hole of the base portion 41 and the spaces between the cap-up 40 and the plurality of support portions 43.

In the rechargeable battery 100 of the embodiment described above, the cap-up 40 is a portion continuously exposed to the external environment, and thus, may include a coating layer for anti-corrosion. The coating layer may be formed as an electrolytic plating, and in order to increase the process efficiency, plating may be performed on a stack of a plurality of cap-ups inserted in an electrolytic bath, rather than a single cap-up individually inserted into an electrolytic bath.

In the rechargeable battery 100 of the first embodiment, the cap-up 40 may be configured to provide a gap between the stacked cap-ups when it is staked with other cap-ups for plating, which enables the plating solution to penetrate into or onto each of the plurality of cap-ups.

Referring to FIG. 4, the terminal portion 42 of the cap-up 40 may include a protruding portion 44 extending outward from an edge located between the plurality of support portions 43 (e.g., the protruding portion 44 extends outward in a direction parallel to the terminal portion 42 and away from a center point C1 of the terminal portion 42). The terminal portion 42 may include a first circumferential portion 42a in contact with the plurality of support portions 43 and a second circumferential portion 42b located between the plurality of support portions 43. The protruding portion 44 may be located at a center (or substantially at a center) of the second circumferential portion 42b.

The entire terminal portion 42, including the protruding portion 44, may form a flat (planar) surface without bending. The protruding portion 44 may have an arc shape having a single curvature, and a curvature center C2 of the protruding portion 44 may be located inside terminal portion 42. The curvature center C2 of the protruding portion 44 may be spaced apart from the curvature center of the terminal portion 42 (the center point C1 of the terminal portion 42) of first and second circumferential portions 42a and 42b by a predetermined distance.

A maximum arcuate width W1 of the protruding portion 44 along a circumference direction of the terminal portion 42 may be smaller than an arcuate width W2 of the second circumferential portion 42b. A maximum protruding amount D1 (e.g., radial distance) of the protruding portion 44 may be smaller than a distance D2 (e.g., a radial distance) between an inner side surface of the base portion 41 and the second circumferential portion 42b when the cap-up 40 is viewed in a planar view (as shown in FIG. 4). Although FIG. 4 illustrates that the protruding portion 44 is located in each of three second circumferential portions 42b, the present disclosure is not limited to this quantity and these locations of the protruding portion 44.

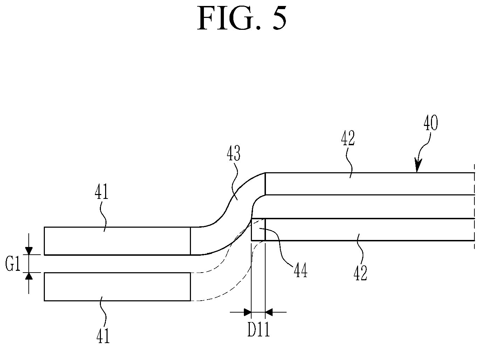

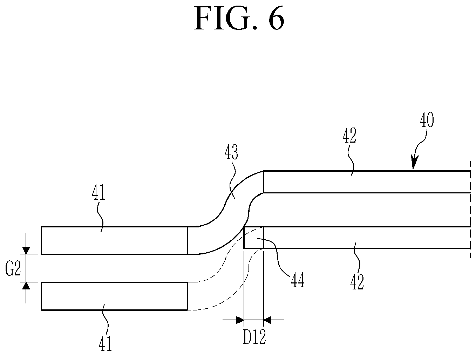

FIG. 5 and FIG. 6 is a partial cross-sectional view showing a stacked state of two of the cap-ups 40 shown in FIG. 4.

Referring to FIG. 5 and FIG. 6, when stacking the plurality of cap-ups 40, the protruding portion 44 may overlap the support portion 43 of the neighboring cap-up 40. The protruding portion 44 may lift up the support portion 43 of the neighboring cap-ups 40, thereby providing a gap between the adjacent cap-ups 40

The interval or spacing of the cap-ups 40 along a stacking direction may be proportional to a protruding amount of the protruding portion 44 (e.g., the maximum protruding amount of the protruding portion 44 in the radial direction). A protruding amount D12 of the protruding portion 44 shown in FIG. 6 may be greater than a protruding amount D11 of the protruding portion 44 shown in FIG. 5. As a result, a gap G2 between the cap-ups 40 shown in FIG. 6 may be greater than the gap G2 between the cap-ups 40 shown in FIG. 5.

Table 1 below is a table showing measurement results of a protruding amount (maximum protruding amount in the radial direction) of protruding portion and the gap between the cap-ups 40.

**Table 1**

| No. | Protruding amount of protruding portion (cm) | Gap between cap-ups (cm) | Overlap prevention effect? |
|---|---|---|---|
| 1 | 0.1 | 0 | No |
| 2 | 0.2 | 0 | No |
| 3 | 0.3 | 0.36 | Yes |
| 4 | 0.4 | 0.56 | Yes |
| 5 | 0.5 | 0.76 | Yes |
| 6 | 0.6 | 0.96 | Yes |

Referring to Table 1, when a protruding amount of the protruding portion is approximately 0.2cm or less, the effect of lifting up the support portion by the protruding portion when stacking the cap-ups is negligible, such that the cap-ups tightly contact each other, and overlap prevention effect is not achieved.

However, when the protruding amount of the protruding portion is approximately 0.3cm or more, the protruding portion lifts up the support portion 43 when stacking the cap-ups 40, such that a gap of approximately 0.36cm or more is achieved between cap-ups 40. Accordingly, when performing the plating process by putting the stack of cap-ups 40 into the electrolytic bath, the plating solution may move between the cap-ups 40 through the gaps between the cap-ups 40 such that the coating layer may be formed on the entire surface of each of the cap-ups with a uniform (or substantially uniform) thickness.

The cap-up 40 in the rechargeable battery 100 according to the first embodiment may improve plating quality of a coating layer by utilizing the protruding portion 44, and may minimize thickness variations of the coating layer. As a result, the rechargeable battery 100 of the first embodiment may effectively suppress or at least mitigate against corrosion of the cap-up 40, and may improve welding quality between the cap-up 40 the safety vent 10, thereby preventing or at least mitigating against manufacturing defects of the cap assembly 140 and also achieving a stable current flow.

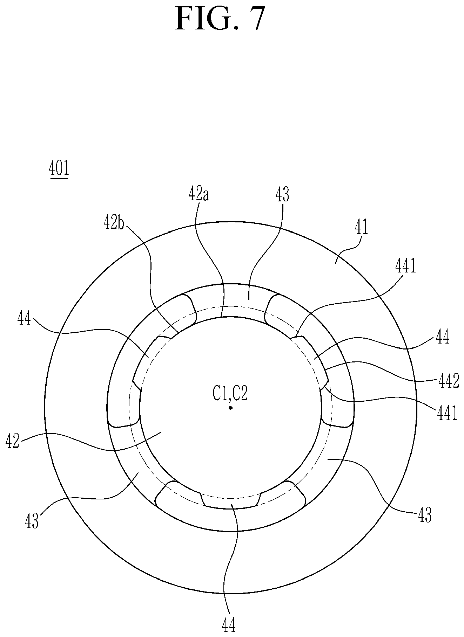

FIG. 7 is a top plan view of a cap-up of a rechargeable battery according to a second embodiment of the present disclosure.

Referring to FIG. 7, in the second embodiment, each of the protruding portions 44 of a cap-up 401 may include two oblique portions 441 in contact with the second circumferential portion 42b and a curved portion 442 extending between the two oblique portions 441. The curved portion 442 may be in an arc shape having a single curvature, and the curvature center C2 of the curved portion 442 may coincide (or substantially coincide) with a curvature center C1 of the first and second circumferential portions 42a and 42b.

The cap-up 401 of the second embodiment may be formed in a configuration identical or similar to that of the cap-up 40 of the first embodiment described above except a planar shape of the protruding portion 44, and the cap-up 401 may perform the same function as the cap-up 40 of the first embodiment.

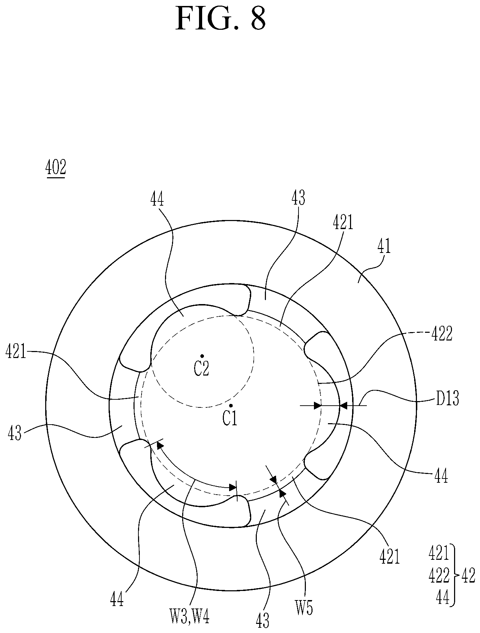

FIG. 8 is a top plan view of a cap-up of a rechargeable battery according to a third embodiment.

Referring to FIG. 8, in the third embodiment, the terminal portion 42 of a cap-up 402 may include a plurality of connection portions 421 connected to the plurality of support portions 43, a circular central portion 422 located on an inner side of the plurality of connection portions 421, and the protruding portions 44 each of which extends outward (e.g., radially outward) from an edge of the central portion 422 located between the plurality of connection portions 421 (each of the protruding portions 44 extends parallel to the central portion 422 and away from the center point C1 of the central portion 422).

Each of the protruding portions 44 may have an arc shape having a single curvature, and the curvature center C2 of each of the protruding portions 44 may be spaced apart from the curvature center C1 of the central portion 422 by a predetermined distance. An arcuate width W3 of each of the protruding portions 44 according to a circumference direction of the cap-up 402 may be equal to or slightly smaller than an arcuate width W4 of a portion of the central portion 422 between the plurality of connection portions 421.

A maximum protruding amount D13 of the protruding portion 44 with respect to the central portion 422 may be greater than a width W5 of the connection portion 421 measured along a radial direction (e.g., a direction extending in all directions from the center point C1 of the central portion 422). When stacking the plurality of cap-ups 402, the protruding portion 44 may lift up the support portions 43 of the neighboring (adjacent) cap-ups 402, thereby providing a gap between the cap-ups 402.

The cap-up 402 of the third embodiment may be formed in a configuration identical or similar to that of the cap-up 40 of the first embodiment described above except a planar shape of the terminal portion 42, and the cap-up 402 may perform the same function as the cap-up 40 of the first embodiment.

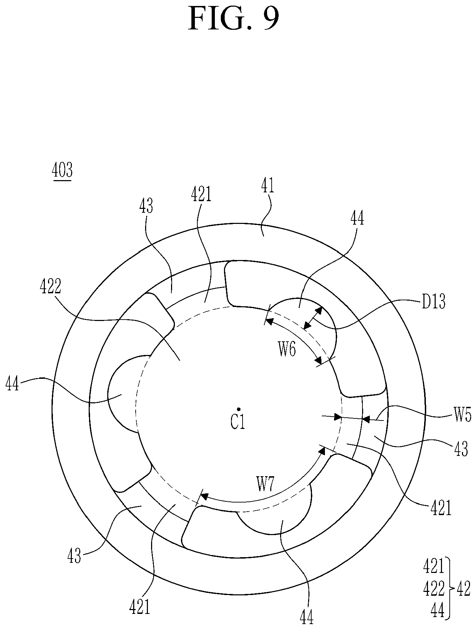

FIG. 9 is a top plan view of a cap-up of a rechargeable battery according to a fourth embodiment.

Referring to FIG. 9, in the fourth embodiment, an arcuate width W6 of each of the protruding portions 44 according to a circumference direction of a cap-up 403 may be smaller than an arcuate width W7 of a portion of the central portion 422 between the plurality of connection portions 421. Accordingly, the protruding portion 44 may be spaced apart by a distance from the plurality of connection portions 421 along the circumference direction of the cap-up 403.

The cap-up 403 of the fourth embodiment may be formed in a configuration identical or similar to that of the cap-up 401 of the third embodiment described above except a planar shape of the terminal portion 42, and the cap-up 403 may perform the same function as the cap-up 401 of the third embodiment.

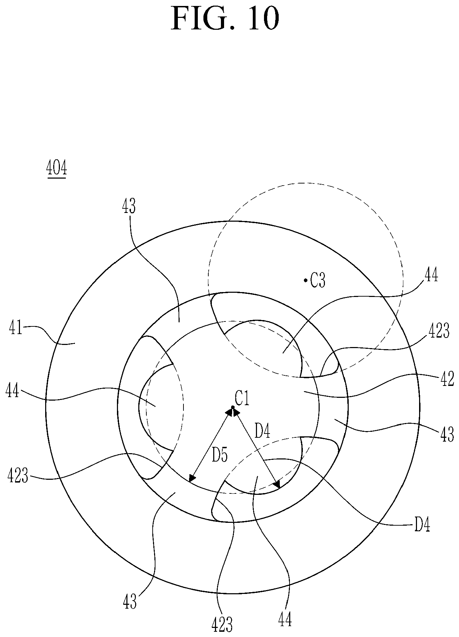

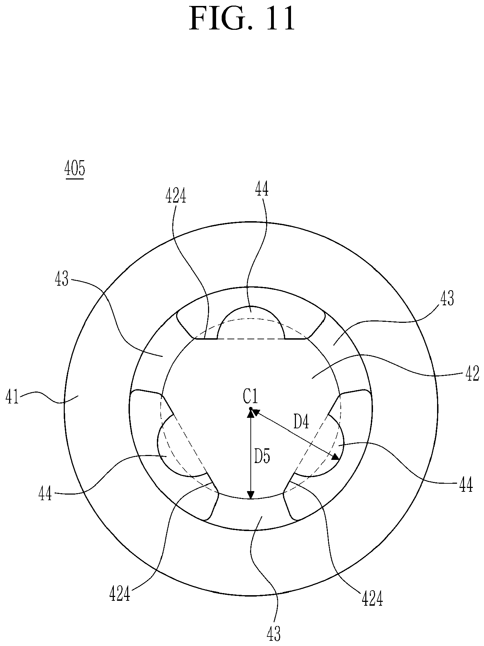

FIG. 10 is a top plan view of a cap-up of a rechargeable battery according to a fifth embodiment. FIG. 11 is a top plan view of a cap-up of a rechargeable battery according to a sixth embodiment.

Referring to FIG. 10 and FIG. 11, in the fifth embodiment and the sixth embodiment, the terminal portion 42 of the cap-ups 404 and 405 may be formed in a non-circular structure in which a recess portion 423 and 424, respectively, is provided on the edge located between the plurality of support portions 43.

In the fifth embodiment, the recess portion 423 may be in an arc shape having a single curvature, and a curvature center C3 of the recess portion 423 may be located outside the terminal portion 42. In the sixth embodiment, a recess portion 424 may be a straight-line shape that connects neighboring two support portions 43 among the plurality of support portions 43.

The protruding portion 44 may be located at a center of the recess portion 423 and 424, respectively, and may be in an arc shape having a single curvature. A distance D4 (e.g., a radial distance) between the center point C1 of the terminal portion 42 and an outermost point of the protruding portion 44 may be greater than a distance D5 (e.g., a radial distance) between the center point C1 of the terminal portion 42 and each of the plurality of support portions 43, when the cap-ups 404 and 405 are viewed in a planar view (shown in FIGS. 10 and 11). When stacking the plurality of cap-ups 404 and 405, the protruding portion 44 may lift up the support portions 43 of the neighboring (adjacent) cap-ups 404 and 405, thereby providing a gap between the cap-ups 404 and 405.

The cap-ups 404 and 405 of the fifth embodiment and the sixth embodiment may be formed in a configuration identical or similar to that of the cap-up 40 of the first embodiment described above except a planar shape of the terminal portion 42, and the cap-ups 404 and 405 may perform the same function as the cap-up 40 of the first embodiment.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

## Claims

1. A rechargeable battery, comprising:
an electrode assembly (130);
a can (120) accommodating the electrode assembly in an interior space; and
a cap assembly (140) coupled to the can to seal the can, the cap assembly comprising a cap-up (40) configured to contact an external device,
wherein the cap-up (40) comprises a base portion (41), a through-hole at a center of the base portion, a terminal portion (42) located farther from the electrode assembly than the base portion, and a plurality of support portions (43) connecting the base portion to the terminal portion, and
wherein the terminal portion (42) comprises a protruding portion (44) extending outward from an edge of the terminal portion between adjacent support portions of the plurality of support portions.

2. The rechargeable battery of claim 1, wherein:
the terminal portion (42) is circular; and
the protruding portion (44) extends parallel to the terminal portion and away from a center point of the terminal portion.

3. The rechargeable battery of claim 1 or 2, wherein:
the terminal portion (42) comprises a first circumferential portion (42a) in contact with the plurality of support portions and a second circumferential portion (42b) between the plurality of support portions; and
the protruding portion (44) is at a center of the second circumferential portion.

4. The rechargeable battery of any of the preceding claims, wherein:
the protruding portion (44) comprises an arc shape having a single curvature; and
a curvature center of the protruding portion is in the terminal portion spaced apart by a distance to the center point of the terminal portion.

5. The rechargeable battery of any of claims 1 to 3, wherein:
the protruding portion (44) comprises two oblique portions (441) and a curved portion (442) extending between the two oblique portions.

6. The rechargeable battery of claim 5, wherein:
the curved portion (442) comprises an arc shape having a single curvature; and
a curvature center (C2) of the curved portion coincides with the center of the second circumferential portion.

7. The rechargeable battery of any of claims 1 to 3, wherein:
a maximum protruding amount of the protruding portion (44) is smaller than a distance between an inner side surface of the base portion and the second circumferential portion in a planar view.

8. A rechargeable battery, comprising:
an electrode assembly (130);
a can (120) accommodating the electrode assembly in an interior space; and
a cap assembly (140) coupled to the can to seal the can, the cap assembly comprising a cap-up (402) configured to contact an external device,
wherein the cap-up (402) comprises a base portion, a through-hole at a center of the base portion, a terminal portion located farther from the electrode assembly than the base portion, and a plurality of support portions connecting the base portion to the terminal portion, and
wherein the terminal portion (42) comprises a plurality of connection portions (421) connected to each of the plurality of support portions, a circular central portion (422) on an inner side of the plurality of connection portions, and a protruding portion (44) extending outward from an edge of the central portion between adjacent connection portions of the plurality of connection portions.

9. The rechargeable battery of claim 8, wherein:
the protruding portion (44) extends parallel to the central portion and away from a center point of the central portion.

10. The rechargeable battery of claim 8 or 9, wherein:
the protruding portion (44) comprises an arc shape having a single curvature.

11. The rechargeable battery of any of claims 8 to 10, wherein:
a maximum protruding amount (D13) of the protruding portion (44) with respect to the central portion is greater than a width of the connection portion along a radial direction.

12. A rechargeable battery, comprising:
an electrode assembly (130);
a can (120) accommodating the electrode assembly in an interior space; and
a cap (140) assembly coupled to the can to seal the can, the cap assembly comprising a cap-up (404) for contacting an external device,
wherein the cap-up (404) comprises a base portion, a through-hole at a center of the base portion, a non-circular terminal portion (42) located farther from the electrode assembly than the base portion, and a plurality of support portions connecting the base portion to the non-circular terminal portion, and
wherein the non-circular terminal portion (42) comprises a protruding portion (44) extending outward from an edge located of the non-circular terminal portion between adjacent support portions of the plurality of support portions.

13. The rechargeable battery of claim 12, wherein:
the non-circular terminal portion (42) comprises a non-circular structure comprising a recess portion on the edge between the adjacent support portions of the plurality of support portions; and
the protruding portion is at a center of the recess portion.

14. The rechargeable battery of claim 13, wherein:
the recess portion comprises an arc shape having a single curvature; and
a curvature center of the recess portion (423) is on an outer side of the terminal portion, or
wherein: the recess portion comprises a straight-line shape that connects two neighboring support portions among the plurality of support portions.

15. The rechargeable battery of claim 13, wherein:
the protruding portion(44) comprises an arc shape having a single curvature; and
a distance between a center point of the terminal portion and an outermost point of the protruding portion is greater than a distance between the center point of the terminal portion and each of the plurality of support portions in a planar view.
